# EUROPEAN PATENT APPLICATION

(11) **EP 1 177 848 A1**
(43) Date of publication of application: **06.02.2002**
(21) Application number: 00306593.5
(22) Date of filing: 02.08.2000
(51) Int. Cl.: B23D 59/02, B28D 7/02

(54) **Concrete cutting machine with slurry collecting mechanism**

(71) Applicant: Nakayama Iron Works Co., Ltd., Shizuoka (JP)
(72) Inventor: Nakayama, Kanji, Fujieda Shizuoka (JP)
(74) Representative: Lawrence, John Gordon

(57) **Abstract**

The concrete cutting machine (3) of the present invention comprises a cutting mechanism (30) for cutting the face by means of a rotating blade (31) covered by a cover (39), a water supply mechanism (40) for supplying and jetting water cooling to the rotating blade (31), and a collecting mechanism (50) for collecting the drainage produced inside the cover by the jetting of the water cooling when the face is cut by the rotating blade (31). Further, in the collecting mechanism (50), the drainage produced inside the cover (39) is sucked through a sucking portion (51) provided on the lower end periphery of the cover to a collecting portion (53) by a sucking operation of a suction blower (56) so that the drainage in which air is removed at the collecting portion is discharged by a pump (57) for collection.

## Description

### BACKGROUND OF THE INVENTION

The present invention relates to a concrete cutting machine of a water cooling type designed to cut a face of construction such as road made of concrete, and more particularly to a concrete cutting machine adapted to easily treat the drainage produced in cutting process.

A road face of concrete or the like or concrete floor face or wall face of a building is cut when a water construction or a gas construction is executed. In this type of cutting, a water cooling type concrete cutting machine in which cutting is executed by means of a rotating blade has been employed.

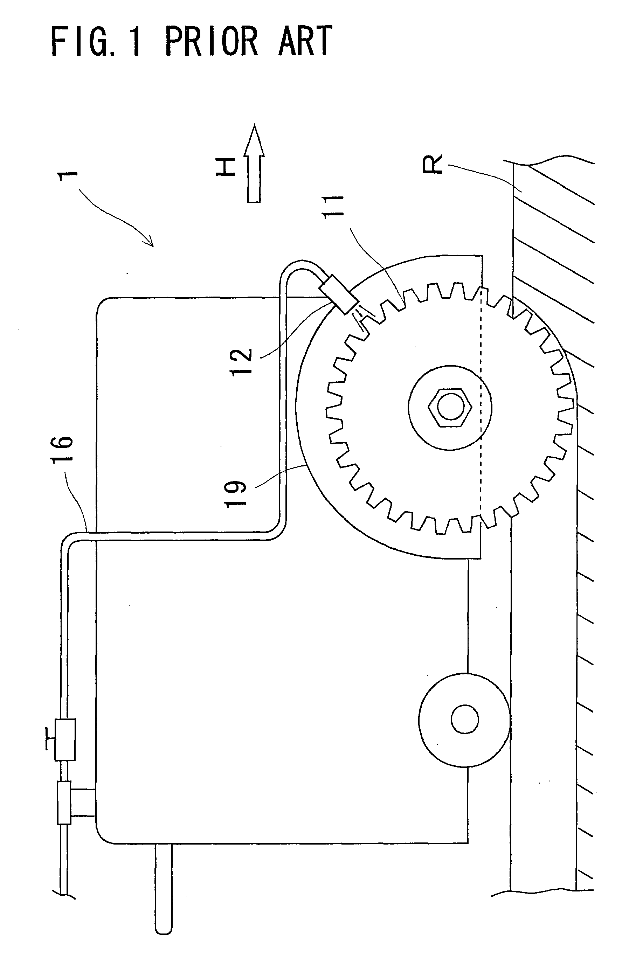

FIG. 1 is an elevational view of a water cooling type concrete cutting machine 1 for cutting a road face or a floor face of a building or the like which has been employed conventionally.

In the concrete cutting machine 1, a road face R can be cut by moving a rotating blade 11 forward as shown by an arrow H by rotating the rotating blade 11. Since heat is generated in the rotating blade 11 by friction against the road face R, the rotating blade 11 has to be cooled down. Therefore, tap water or water fed through a pump is jetted as water cooling from a nozzle 12 to the rotating blade 11 through a water supply pipe 16.

The cooling water jetted to the rotating blade 11 becomes drainage in which chips of the concrete cut by the rotating blade 11 and the like are mixed and is discharged to the lower part of a cover 19 of the rotating blade 11.

In this way, when cutting the road face R or the like is executed by the concrete cutting machine 1, cooling water such as tap water is jetted to the rotating blade 11. The concrete cutting machine 1 is moved forward as shown by the arrow H so as to execute cutting while rotating the rotating blade 11, and the drainage in which chips and the like are mixed is discharged to the lower part of the cover 19 of the rotating blade 11.

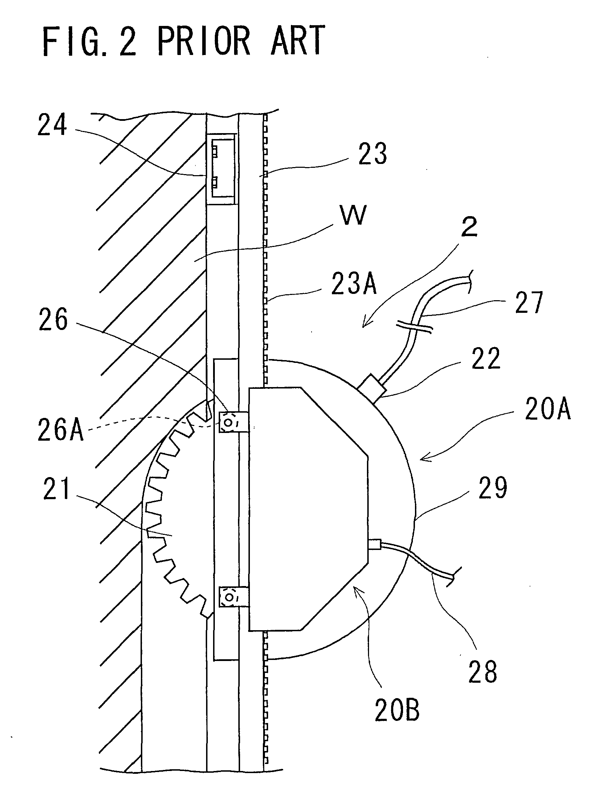

FIG. 2 shows in an elevation of another water cooling type concrete cutting machine 2 for cutting a wall face of a building or the like which has been employed conventionally.

This concrete cutting machine 2 is composed of a rotating blade 21, a cutting part 20A provided with a cover 29 in which the rotating blade 21 is accommodated, and a moving part 20B provided with the cutting part 20A at the side face thereof. The moving part 20B is attached at a guide rail 23 fixed on a wall face W by means of a rail bracket 24. Since a guide roller 26A is attached at the moving part 20B via a roller bracket 26, the moving part 20B is slidably attached at the guide rail 23. Since rack gears 23A are formed on the guide rail 23 and pinion gears (not shown) engaging with the rack gears 23A are provided in the moving part 20B, the moving part 20B can move upward/downward by the rotation of the pinion gears. The pinion gears are coupled with a motor (not shown) to which electric power is supplied through a power cable 28 and are rotated by the drive of the motor.

Cooling water which may be tap water or water fed by a pump is fed via a water supply pipe 27 and is jetted from a nozzle 22 to the rotating blade 21 so as to execute cooling the blade 21 down. The cooling water jetted to the rotating blade 21 changes into drainage containing chips of the concrete cut by the rotating blade 21 and the like drops downward.

As described above, when cutting the wall face W of a building or the like is executed by the concrete cutting machine 2, cooling water such as tap water is jetted to the rotating blade 21. The concrete cutting machine 2 is moved upward along the guide rail 23 so as to execute cutting while the rotating blade 21 is rotated. The drainage with chips and the like mixed therewith drops downward and is temporarily stored in a puddle formed by means of an enclosure on a floor face or the like so that the drainage is disposed in other ways.

There are following problems with the concrete cutting machines of the prior arts described above.

In the concrete cutting machine 1, there is a problem that a flow of muddy water produced by cutting a road face or the like is not favorable from an environmental point of view, and even collecting and treating work thereof is extremely troublesome.

Similarly, the concrete cutting machine 2 for cutting a wall face of a building or the like faces the same problem of dripping of drainage onto a floor which is not favorable from an environmental point of view. Disposal and treatment of the drainage temporally stored in a puddle formed by means of an enclosure on a floor face or the like are extremely troublesome and a burden.

### SUMMARY OF THE INVENTION

The present invention has been made in view of the above described circumstances, and it is an object of the present invention to provide an epoch-making concrete cutting machine by which drainage produced by cutting a face of construction such as road made of concrete is simply and easily treated without discharging it on a road or a floor of a building or the like.

### BRIEF DESCRIPTION OF THE DRAWINGS

FIG. 1 is an elevation of an example of a water cooling type concrete cutting machine for cutting a road face or a floor face of a building or the like which has been employed conventionally.
FIG. 2 is an elevation of another example of a water cooling type concrete cutting machine for cutting a wall face of a building or the like which has been employed conventionally.
FIG. 3 is an elevation of a water cooling type concrete cutting machine for cutting a road face or the like according to the present invention.
FIG. 4 is a perspective view of a cover employed in the water cooling type concrete cutting machine for cutting a road face or the like according to the present invention.
FIG. 5 shows a structure of a collecting portion employed in the water cooling type concrete cutting machine for cutting a road face or the like according to the present invention.
FIG. 6 is a sectional view of a sucking portion employed in the water cooling type concrete cutting machine for cutting a road face or the like according to the present invention.
FIG. 7 is an elevation of another water cooling type concrete cutting machine for cutting a wall face or the like according to the present invention.

### DETAILED DESCRIPTION OF THE PREFERRED EMBODIMENTS

The present invention will now be explained by reference to accompanying drawings.

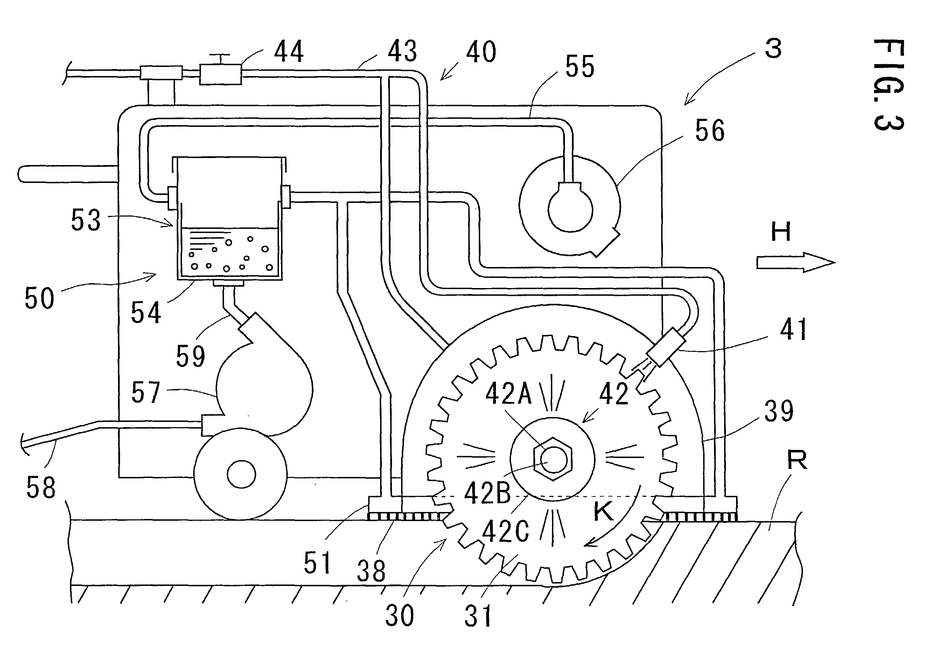

FIG. 3 is an elevation of a water cooling type concrete cutter device 3 with drainage treating function for cutting a road face or the like according to the present invention. In the concrete cutting machine 3, cooling water is jetted to a rotating blade 31, the concrete cutting machine 3 is moved forward as shown by an arrow H so as to execute cutting of a road face R, and drainage in which chips and the like produced while cutting operation are mixed is collected. The concrete cutting machine 3 is composed of a cutting mechanism 30, a water supply mechanism 40, and a collecting mechanism 50.

The cutting mechanism 30 is adapted to cut the road face R and is provided with a rotating blade 31 for cutting the road face R by rotation thereof and a cover 39 in which the rotating blade 31 is accommodated.

The water supply mechanism 40 is adapted to jet cooling water onto the rotating blade 31 for cooling and is provided with a water supply pipe 43 through which the cooling water is supplied, an outer nozzle portion 41 connected with the water supply pipe 43 and jetting the cooling water to the tip of the rotating blade 31 and then to the side faces of the blade 31, an inner nozzle portion 42 for jetting the cooling water from the central side to the rotating blade 31, and a regulating valve 44 for the water cooling.

The inner nozzle portion 42 is adapted to cause the cooling water such as tap water to flow from the water supply pipe 43 to a water supply pipe portion 42B formed in the central portion of a shaft 42A about which the rotating blade 11 is attached and jetting it from the water supply pipe portion 42B to both side faces of the rotating blade 31 through a hole provided in the shaft 42A via the inside of a blade presser 42C and a hole provided in the blade presser42C.

It is also possible to employ either the outer nozzle portion 41 or the inner nozzle portion 42.

The regulating valve 44 is adapted to regulate water supply of the cooling water to the outer nozzle portion 41 and the inner nozzle portion 42 as required and can regulate water supply in accordance with condition of the road face R and the cutting condition of the road face R.

The collecting mechanism 50 is adapted to collect drainage produced by jetting of the cooling water and discharged to the inside of a brush 38 of the cover 39 and is provided with a sucking portion 51 for drainage, a collecting portion 53, a suction blower 56, and a pump 57.

The sucking portion 51 has a section of a channel shape and is provided along the entire periphery of the lower end of the cover 39. The brush 38 is provided along the outer periphery of the lower end of the sucking portion in such a manner as to stick to the road face R so as to prevent the drainage from being discharged to the outside. A collecting basket 54 with a large number of openings having a water permeability is accommodated in the collecting portion 53. Although the brush 38 is needed on the entire periphery at the lower side of the cover 39, the sucking portion 51 may be provided on a part of the periphery of the lower end of the cover 39.

Further, in the collecting mechanism 50, a suction pipe 52 is provided between the sucking portion 51 and the collecting portion 53, a connecting pipe 55 is provided between the collecting portion 53 and the suction blower 56, a water sucking pipe 59 is provided between the collecting portion 53 and the pump 57, and a water discharging pipe 58 is provided in the outlet side of the pump 57.

Next, operation of cutting the road face by means of the concrete cutting machine 3 will be explained.

In order to cool the rotating blade 31, water cooling is jetted from the outer nozzle portion 41 from the tip of the rotating blade 31 to both side faces of the blade 31 and is jetted from the inner nozzle portion 42 to both side faces of the rotating blade 31.

With this arrangement, cooling down and smoothing of the rotating blade 31 can be executed effectively, and it is also possible to improve the effect of cutting and cooling by mixing cutting liquid, surfactant, or the like in the water cooling.

The rotating blade 31 which is being jetted by the cooling water is driven forward as shown by an arrow K so as to cut the road face R.

The water cooling jetted to the rotating blade 31 becomes drainage in which chips and the like are mixed, drops downward, is prevented from being discharged to the outside by the brush 38 so as to be stored in the inside of the cover 39, and is collected by the collecting mechanism 50.

In the collecting mechanism 50, the drainage stored in the inside of the cover 39 is sucked from the sucking portion 51 provided on the lower end periphery of the cover 39 to the collecting portion 53 via the suction pipe 52 by the sucking operation of the suction blower 56. In the collecting portion 53, drainage is stored in the collecting basket 54, and relatively large chips of road and pieces of stones such as pebbles on the road are also accumulated in the drainage stored in the collecting basket 54 accommodated in the collecting portion 53. These pieces of stones remain in the collecting basket 54. Although air is mixed in the drainage in the collecting portion 53 when the drainage is sucked through the sucking portion 51, the air is removed at the collecting portion 53, and the drainage is sucked by the pump 57 via the water sucking pipe 59 and is discharged through the water discharging pipe 58.

The drainage discharged from the discharging pipe 58 is stored in a storing tank (not shown) so as to be disposed, or is disposed on a predetermined disposal place.

The pieces of stones accumulated in the collecting basket 54 can be thrown out by taking the collecting basket 54 out of the collecting portion 53.

Further, in order to collect drainage effectively, the collecting mechanism 50 may be constituted in such a manner that the suction capacity through the sucking part 51 by the suction blower 56 is made greater than the water supply capacity (flow rate) to the rotating blade 31 and the discharge capacity by the pump 57 is made greater than the suction capacity.

Although in the embodiment above described the rotating blade 31 is rotated in the rotation direction K or downward with respect to the direction H of the concrete cutting machine 3 so as to cut (down cut) the road face R is explained, in case the rotation is reversed (upper cut), the outer nozzle portion 41 may be attached at the rear side of the cover 39.

The concrete cutting machine 3 is not limited to cutting a concrete road but may be widely used for cutting other faces to be cut such as a road face made of asphalt, bricks, or the like, a face of concrete or bricks or the like of a building, or stone materials.

Thus, since the concrete cutting machine of the present invention is provided with the collecting mechanism 50, the drainage resulting from cutting a structure such as concrete can be simply, easily treated without being discharged on a road or a floor of a building or the like. Further, since the brush 38 is attached at the lower end of the cover 39 so as to temporarily store the drainage inside the brush 38, soundproofing effect can be improved.

With respect to the collecting mechanism 50 of the concrete cutting machine of the present invention, since the drainage stored inside the cover 39 is sucked from the sucking portion 51 provided in the lower end periphery of the cover 39 to the collecting portion 53 by the sucking operation of the suction blower and the drainage in which the air portion is removed at the collecting part 53 is discharged by the pump 57, the collection of the drainage can be accurately and easily executed with a simple structure.

Further, with respect to the collecting mechanism 50 of the concrete cutting machine of the present invention, the suction capacity through the sucking portion 51 by the suction blower 56 may be made greater than the water supply capacity to the rotating blade 31, and the discharge capacity by the pump 57 may be made greater than this suction capacity, whereby the collection of the drainage can be executed more effectively.

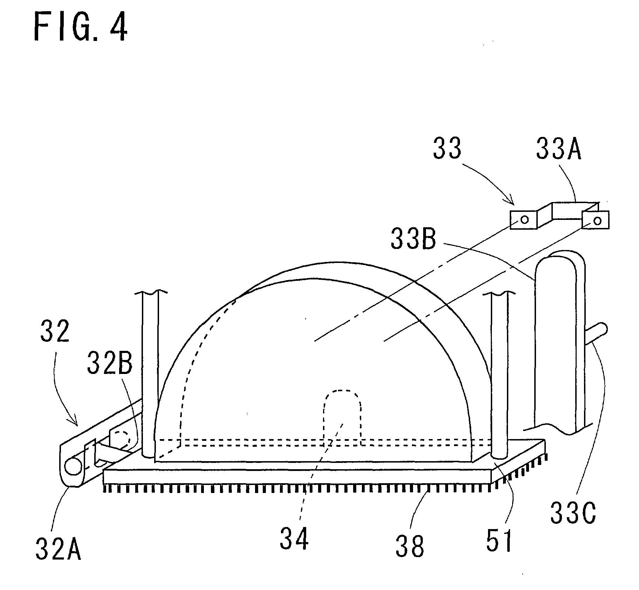

FIG. 4 is a perspective view of the cover 39 of the water cooling type concrete cutting machine 3 for cutting a road face or the like according to the present invention.

The sucking portion 51 and the brush 38 are attached at the cover 39, and the cover 39 is constituted so as to maintain an appropriate space against a road face. The cover 39 is provided with a rear end maintaining portion 32 provided in the rear end of the cover 39, a side face maintaining portion 33 provided on the backside face of the cover 39, and a notch portion 34.

The rear end maintaining portion 32 is composed of a stay 32A of a channel shape attached at a frame (not shown) of the concrete cutting machine 3 shown in FIG. 3 and a T-shape bar 32B fixed on the sucking portion 51 and attached upward/downward slidably at the stay 32A. The side face maintaining portion 33 is composed of a fixing bar 33B fixed on the frame and provided with a stopper 33C and a stay 33A of a channel shape fixed on the side face of the cover 39 and attached slidably upon the fixing bar 33B. The notch portion 34 is a slide hole formed in the cover 39 through which the shaft 42A (refer to FIG. 3) is inserted.

Since the cover 39 of the concrete cutting machine of the present invention is attached upward/downward slidably, an appropriate space with a road face or the like can be maintained so that drainage can be collected without being leaked to the outside.

The stopper 33C is set so that the cover 39 can be at the lowest position at which an appropriate space with a road face or the like can be maintained.

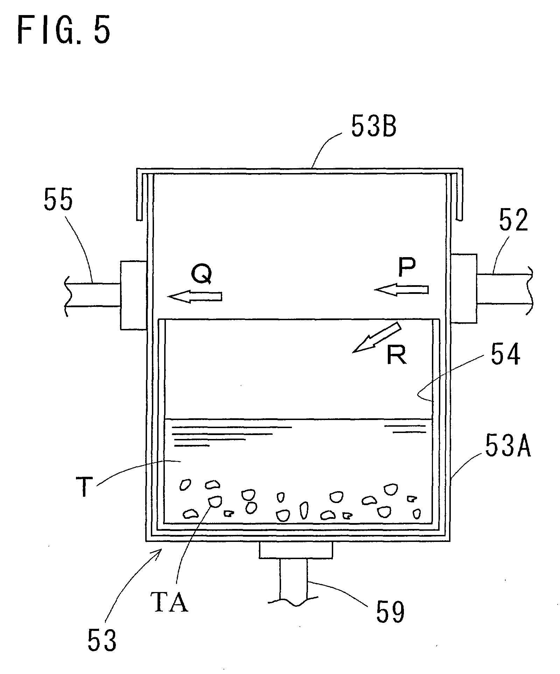

FIG. 5 shows the collecting portion 53 employed in the water cooling type concrete cutting machine 3 for cutting a road face or the like according to the present invention.

In the collecting portion 53, the drainage sucked in the suction pipe 52 enters the inside of a collecting container 53A as shown by arrows P, air is sucked in the connecting pipe 55 as shown by an arrow Q, and the liquid portion of the drainage drops as shown by an arrow R so as to be stored inside the detachable/attachable collecting basket 54. With respect to this stored drainage T, pieces of stones TA remain in the collecting basket 54, and sucking of water is executed through the water sucking pipe 59.

Since the collecting portion 53 of the concrete cutting machine of the present invention has the detachable/attachable collecting basket 54, the pump 57 does not sustain damage by the stone pieces TA, and the water sucking pipe 59 and the water discharging pipe 58 (refer to FIG. 3) do not clog.

The stone pieces TA accumulated inside the collecting basket 54 can be thrown out by opening a collection lid 53B and taking out the collecting basket 54.

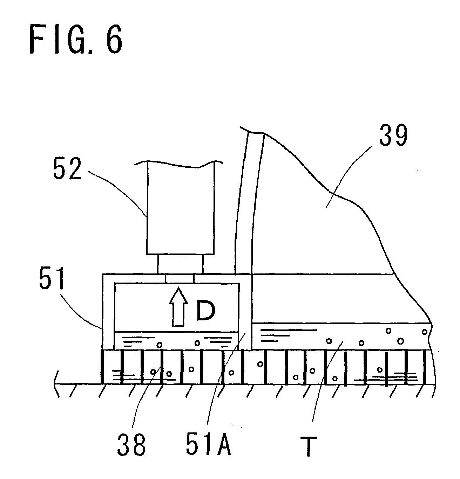

FIG. 6 shows a section view of a part of the sucking portion 51 of the water cooling type concrete cutting machine 3 for cutting a road face or the like according to the present invention.

Drainage T dropping inside the cover 39 moves to the lower part of the sucking part 51 that has a section of a channel shape and is sucked in the suction pipe 52 as shown by an arrow D. The sucking portion 51 is separated by a side wall 51A from the inside of the cover 39, and the drainage T is effectively sucked into the suction pipe 52 without sucking extra air inside the cover 39.

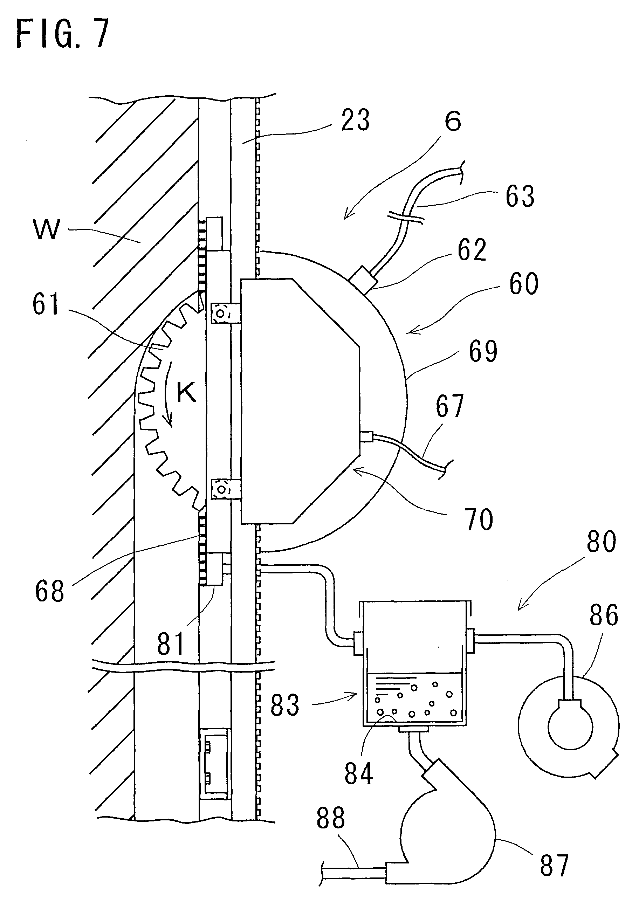

FIG. 7 is an elevation of a water cooling type concrete cutting machine 6 for cutting a wall face or the like according to the present invention. The concrete cutting machine 6 is constituted in such a manner that a rotating blade 61 is moved upward while being rotated along a wall face W, water cooling is jetted to the rotating blade 61 so as to cut the wall face W, and the drainage produced by the cooling water while cutting is collected. The concrete cutting machine 6 is composed of a cutting mechanism 60, a moving mechanism 70, and a collecting mechanism 80.

The cutting mechanism 60 is adapted to cut the wall face W and is provided with the rotating blade 61 and a cover 69 in which the rotating blade 61 is accommodated. Further, a nozzle portion 62 of a water supply mechanism for executing jetting to the rotating blade 61 is provided in the cutting mechanism 60.

The moving mechanism 70 provided with the cutting mechanism 60 at the side face thereof is constituted so as to be slidable upwardly and downwardly on the guide rail 23 by the drive of a motor (not shown) to which electric power is supplied through a power cable 67.

The collecting mechanism 80 is adapted to collect the drainage produced by jetting to the rotating blade 61 and is provided with a sucking portion 81 for drainage, a collecting portion 81, a suction blower 86, and a pump 87. In the sucking portion 81, the brush 68 is provided so as to stick to the wall face W for preventing the drainage from being discharged to the outside.

Next, operation of cutting by means of the concrete cutter device 6 will be explained.

In order to cool the rotating blade 61, cooling water supplied through a water supply pipe 63 is jetted from the nozzle portion 62. The rotating blade 61 ascends in accordance with the movement of the moving mechanism 70 while being subject to the jetting of the cooling water and rotating in a rotation direction K shown by an arrow so as to cut the wall face W.

The cooling water jetted to the rotating blade 61 becomes drainage in which chips and the like are mixed, drops downward, is prevented from being discharged to the outside by the brush 68 so as to be stored in the lower side of the cover 39, and is collected by the collecting mechanism 80.

In the collecting mechanism 80, the drainage stored in the lower side of the cover 69 is sucked through the sucking portion 81 to the collecting part 83 by the sucking operation of the suction blower 86. In the collecting portion 83, stone pieces are accumulated in the drainage stored in a collecting basket 84 accommodated in the collecting portion 83. These stone pieces remain in the collecting basket 84. Although air is mixed in the drainage in the collecting portion 83 when the drainage is sucked through the sucking portion 81, the air is removed at the collecting portion 83, and the drainage is discharged through the water discharging pipe 88 by the pump 87.

The drainage discharged from the discharging pipe 88 is stored in a storing tank so as to be disposed, or is disposed on a predetermined disposal place.

The stone pieces accumulated in the collecting basket 84 can be thrown out by taking the collecting basket 54 out of the collecting part 53.

The concrete cutting machine 6 is not limited to cutting of a concrete wall face but may be widely used for cutting other faces such as a wall face of bricks, tiles, or the like, or a prop of a building or the like. The cutter machine 6 may be constituted to execute not only vertical cutting but also diagonal cutting, horizontal cutting, cutting of a slant face, or the like.

Thus, since the concrete cutting machine 6 is provided with the collecting mechanism 80, the drainage produced by cutting of a face of a wall face such as concrete wall can be simply and easily treated without being discharged on a floor of a building.

## Claims

1. A concrete cutting machine comprising:
a cutting mechanism for cutting a face to be cut by means of a rotating blade accommodated inside a cover,
a water supply mechanism for supplying and jetting water cooling to the rotating blade, and
a collecting mechanism for collecting the drainage produced inside the cover by the jetting of the water cooling when the face is cut by the rotating blade.

2. The concrete cutting machine according to claim 1, wherein in the collecting mechanism, the drainage produced inside the cover is sucked through a sucking portion provided on the lower end periphery of the cover to a collecting portion by a sucking operation of a suction blower so that the drainage in which air is removed at the collecting portion is discharged by a pump.

3. The concrete cutting machine according to claim 2, wherein the collecting mechanism is constituted in such a manner that the suction capacity through the sucking portion by the suction blower is made greater than the water supply capacity to the rotating blade and the discharge capacity by the pump is made greater than the suction capacity.

4. The concrete cutting machine according to claim 1 or 2, wherein the cover is attached upward/downward slidably.

5. The concrete cutting machine according to claim 2, wherein the collecting portion has a detachable/attachable collecting basket.

6. The concrete cutting machine according to claim 2, wherein the sucking portion has a section of a channel shape and a side wall against the inside portion part of the cover.

7. The concrete cutting machine comprising:
a cutting mechanism for cutting a face to be cut by means of a rotating blade accommodated inside a cover,
a water supply mechanism for supplying and jetting water cooling to the rotating blade, and
a collecting mechanism for collecting the drainage produced inside the cover by the jetting of the water cooling when the face is cut by the rotating blade,
wherein said machine is constituted for cutting a wall face by attaching at least the cutting mechanism and the water supply mechanism at a slide rail provided upon the face to be cut.
